Europäisches Patentamt

European Patent Office

Office européen des brevets

(19)

(11) Veröffentlichungsnummer: **0 236 968**
**A2**

(12) **EUROPÄISCHE PATENTANMELDUNG**

(21) Anmeldenummer: 87103186.0

(22) Anmeldetag: 06.03.87

(51) Int. Cl.⁴: **H04Q 7/04** , H04B 7/26

(30) Priorität: 10.03.86 DE 3607890

(43) Veröffentlichungstag der Anmeldung:
16.09.87 Patentblatt 87/38

(84) Benannte Vertragsstaaten:
AT CH DE ES FR GB IT LI NL SE

(71) Anmelder: **Siemens Aktiengesellschaft Berlin
und München**
**Wittelsbacherplatz 2**
**D-8000 München 2(DE)**

(72) Erfinder: **Strehl, Herbert, Dipl.-Ing.**
**Drozzaweg 15**
**D-8000 München 70(DE)**

(54) Verfahren zur Übertragung digitaler Signale bei Mobilfunksystemen.

(57) Die Übertragung zwischen Fest-und Mobilstationen wird in TDMA-Technik durchgeführt mit einem Zeitschlitzraster, in dem Nachrichtentelegramme über in multiplexer Anordnung gestaffelte Signalkanäle (Burst) übertragen werden. Dabei ist wegen reflexionsbedingter Laufzeitunterschiede eine Burst-Phasen-Regelung vorgesehen. Diese erfolgt in der Weise, daß von der Feststation (FS) für jede Mobilstation (MS) eine Information zur Regelung der Burstphase mitübertragen wird, die die erforderliche Phasenlage in bezug auf den von der Feststation gesendeten Rahmen in codierter Form enthält.

FIG 1

EP 0 236 968 A2

## Verfahren zur Übertragung digitaler Signale bei Mobilfunksystemen

Die Erfindung bezieht sich auf ein Verfahren zur Übertragung digitaler Signale bei Mobilfunksystemen mit Fest-und Mobilstationen, mit einem Zeitschlitzraster, in dem Nachrichtentelegramme über in multiplexer Anordnung gestaffelte Signalkanäle (Burst) übertragen werden.

Die TDMA-Technik (Time-Division-Multiple-Access) wurde insbesondere für den Satellitenfunk entwickelt. Bei ihr werden eine Vielzahl von Übertragungskanälen nicht wie bei der FDMA-Technik durch Zuteilung von Sendefrequenzen, sondern durch Zuteilung von Zeitabschnitten gebildet. Dabei müssen die vielen Bodenstationen, die alle unterschiedliche Entfernungen vom Satelliten haben, ihre Signalbursts so absenden, daß sie beim Satellitentransponder in die zugeteilten Zeitlücken treffen. Da sich der Satellit in seiner geostationären Umlaufbahn im Tagesrhythmus leicht bewegt, ist auch nach dem Erstzugriff ein ständiges Nachregeln der Burstphase notwendig. Dies ist beim Satellitenfunk leicht zu machen, weil der Transponder des Satelliten den gesamten Rahmen der von den verschiedenen Bodenstationen gesendeten Bursts nur in einen anderen Frequenzbereich umsetzt und dann zurück auf die Erde sendet. Jede Bodenstation kann so nicht nur die für sie bestimmten Bursts der anderen Bodenstationen, sondern auch ihren eigenen Burst empfangen und dadurch auch in die richtige Lage regeln.

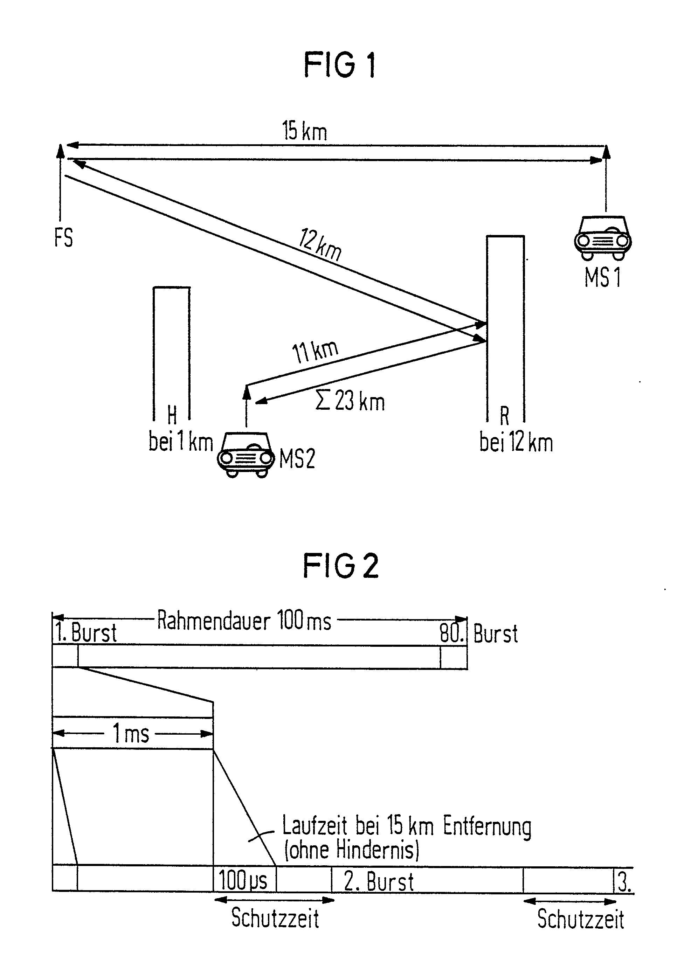

Beim Mobilfunk ist dies nicht möglich, weil die Feststation nicht als Transponder arbeitet, sondern die von den einzelnen Mobilstationen gesendeten Signale über das Fernsprechnetz zum anderen Teilnehmer schickt. Für die Mobilstation besteht also nicht wie beim Satellitenfunk die Möglichkeit, die durch die Bewegung des Fahrzeugs verursachte Abweichung der richtigen Burstlage festzustellen. Dabei kann der Laufzeitunterschied bei Mobilstationen, die maximal 15 km Entfernung von der Feststation haben, bis zu 100 μs betragen und sich in ungünstigen Funkausbreitungsverhältnissen (Empfang über Reflexionen) noch weiter steigern. Hierzu zeigt Fig. 1 eine Skizze zur Berechnung von Laufzeiten im Mobilfunk. Die direkte Entfernung zwischen einer Feststation FS und einer ersten Mobilstation MS1 beträgt 15 km. Für eine zweite Mobilstation MS2, die sich hinter einem im Abstand von 1 km zur Feststation FS liegenden Hindernis H befindet und deren Signale von und zur Fest-station über einen reflektierenden Gegenstand R im Abstand von 12 km zur Feststation FS laufen, ergibt sich eine Laufzeit, die aus der Entfernung 12 km + 11 km = 23 km resultiert.

Eine Lösung hierfür könnte darin bestehen, die Burstdauer so groß zu machen, daß eine Laufzeitänderung von 100 μs vernachlässigt werden kann. In Fig. 2 ist hierfür der Rahmenaufbau eines TDMA-Systems für 80 Mobilfunkkanäle dargestellt. Bei z.B. 10 kbit/s pro Kanal und 1000 Bit/Burst ergibt sich eine Burstdauer von 1 ms und eine Rahmenlänge von 100 ms, wenn man 25% Schutzzeit einplant. Schutzzeit ist dabei diejenige Zeit, die zwischen jeweils zwei Bursts freigehalten ist, bis wieder eine Information für den nächsten Kanal gesendet wird. Der Sendetakt würde 1 MHz betragen. In einem solchen System würden die Burstphasenschwankungen schon bei ungehinderter Funkausbreitung 10% der Burstdauer betragen, so daß eine Schutzzeit von 25% vorgesehen werden muß.

Ein solches System würde jedoch eine sehr lange Signallaufzeit, nämlich von über 200 ms verursachen, was etwa genau so viel ist wie eine Satellitenübertragung. Dies ergibt sich daraus, daß das erste Bit aus dem 1000 Bit-Block des 10 kbit/s-Signal 100 ms, das ist eine Rahmenlänge, warten muß, bis es übertragen wird. Die Übertragung dauert zwar nur etwa 1 ms, und dann kann auch sofort mit dem Auslesen des Blockspeichers beim Empfänger begonnen werden. Aber in der Rückrichtung entsteht nochmals dieselbe Verzögerung. Diese 200 ms Verzögerungszeit sind systembedingt und entstehen auch, wenn sich die Mobilstation dicht bei der Feststation befindet. Solche Verzögerungszeiten sind mit Sicherheit nur für den Satellitenfunk zugelassen, für ein Mobilfunk-TDMA-System sind jedoch kürzere Bursts vorzusehen, was zu einer Burstphasenregelung führt.

Der Erfindung liegt die Aufgabe zugrunde, eine Lösung anzugeben, die die Verwendung der TDMA-Technik beim Mobilfunk ermöglicht.

Diese Aufgabe wird bei einem Verfahren der eingangs beschriebenen Art gemäß der Erfindung in der Weise gelöst, daß von der Feststation für jede Mobilstation eine Information zur Regelung der Burstphase mitübertragen wird, die die erforderliche Phasenlage in bezug auf den von der Feststation gesendeten Rahmen in codierter Form enthält.

Durch die erfindungsgemäßen Maßnahmen werden der Mobilstation Informationen für die Burstphasenregelung gegeben und dadurch das Problem gelöst, daß der Mobilstation Möglichkeiten fehlen, die Lage des eigenen Sendebursts im Rahmen der von allen anderen Mobilstation gesendeten Bursts zu erkennen. Durch die Übermittlung der erforderlichen Phasenlage in bezug auf den von der Feststation gesendeten Rahmen für jeden Burst der Mobilstation ist eine Burstphasenregelung auch sicher bei sich schnell ändernder Signallaufzeit infolge des Auftretens eines Hindernisses möglich.

Mit einer solchen Regelung wird erreicht, daß die Schutzzeit zwischen den einzelnen Bursts eines Rahmens wesentlich verringert werden kann, was zu einer deutlich besseren Ausnutzung der Übertragungskapazität führt. Indem mit jedem Burst in Richtung Mobilstation eine Information zur Regelung der Burstphase mitübertragen wird, trifft trotz veränderlicher Funkausbreitungszeit der Burst der Mobilstation in die vorgesehene Lücke des Empfangsrahmens der Feststation. Da sich aber die Funkausbreitungszeit durch das Durchfahren von Funkschatten-das Signal läuft dann über weit entfernte Reflexionen-sehr schnell ändern kann, muß immer noch eine, wenn auch kleinere, Schutzzeit vorgesehen werden, weil die Regelgröße für die Burstphase der Mobilstation immer erst mit dem nächsten Burst, d.h. nach einer Rahmenlänge mitgeteilt werden kann und sich inzwischen die Laufzeit des Funksignals geändert hat.

In vorteilhafter Weiterbildung des Erfindungsgegenstandes ist vorgesehen, daß bei der Berechnung der richtigen Burstphasenlage in der Feststation zugleich die jeweilige effektive Entfernung der Mobilstationen festgestellt wird, was für die automatische Kanalzuteilung beim Überschreiten der Grenzen der Funkzellen von Bedeutung ist.

## Ansprüche

1. Verfahren zur Übertragung digitaler Signale bei Mobilfunksystemen mit Fest-und Mobilstationen, mit einem Zeitschlitzraster, in dem Nachrichtentelegramme über in multiplexer Anordnung gestaffelte Signalkanäle (Burst) übertragen werden,
**dadurch gekennzeichnet,**
daß von der Feststation für jede Mobilstation eine Information zur Regelung der Burstphase mitübertragen wird, die für jeden Burst der Mobilstation die erforderliche Phasenlage in bezug auf den von der Feststation gesendeten Rahmen in codierter Form enthält.

2. Verfahren nach Anspruch 1,
**dadurch gekennzeichnet,**
daß bei der Berechnung der richtigen Burstphasenlage in der Feststation zugleich die jeweilige effektive Entfernung der Mobilstationen festgestellt wird.

# FIG 1

15 km

FS

12 km

MS 1

11 km

∑ 23 km

H
bei 1 km

MS2

R
bei 12 km

# FIG 2

Rahmendauer 100 ms

1. Burst

80. Burst

1 ms

Laufzeit bei 15 km Entfernung
(ohne Hindernis)

100 µs

2. Burst

3.

Schutzzeit

Schutzzeit